# EUROPÄISCHE PATENTSCHRIFT

(11) **EP 3 207 609 B1**
(45) Veröffentlichungstag und Bekanntmachung des Hinweises auf die Patenterteilung: **26.08.2020**
(21) Anmeldenummer: 15759821.0
(22) Anmeldetag: 10.09.2015
(51) Int. Cl.: H02G 3/32, F16B 21/08, F16L 3/13

(54) **BEFESTIGUNGSVORRICHTUNG FÜR EINE LEITUNG IN EINEM FAHRZEUG**
FASTENING DEVICE FOR A LINE IN A VEHICLE
DISPOSITIF DE FIXATION POUR UN CONDUCTEUR DANS UN VÉHICULE

(30) Priorität: 17.10.2014 DE 102014221102
(43) Veröffentlichungstag der Anmeldung: 23.08.2017
(73) Patentinhaber: Robert Bosch GmbH, 70442 Stuttgart (DE)
(72) Erfinder: LOEBE, Thomas, 99817 Eisenach (DE)
(86) Internationale Anmeldenummer: PCT/EP2015/070674
(87) Internationale Veröffentlichungsnummer: WO 2016/058757

(56) Entgegenhaltungen:
- EP-A1- 0 764 788
- EP-A1- 1 209 397
- EP-A1- 1 521 024
- US-A- 5 601 262
- US-A1- 2012 132 761

## Beschreibung

Die Erfindung geht aus von einer Befestigungsvorrichtung für eine Leitung, insbesondere für ein elektrisches Kabel, in einem Fahrzeug, nach der Gattung des unabhängigen Patentanspruchs 1.

Aus dem Stand der Technik sind Befestigungsvorrichtungen für Leitungen, insbesondere für elektrische Kabel in einem Fahrzeug bekannt, welche die Drehposition und axiale Position des Befestigungselements mit der Befestigungsstruktur an der Leitung festlegen. Solche elektrischen Kabel werden im Fahrzeug beispielsweise zur elektrischen Verbindung von Sensoren, welche an einem Kabelende angeordnet sind, mit korrespondierenden Auswerte- und Steuerschaltungen verwendet, welche am anderen Kabelende angeordnet sind. Hierbei ist insbesondere die Vorgabe der Drehposition der Befestigungsstruktur während der Sensorproduktion aufgrund von Anforderungen an das Mantelmaterial des Kabels und die unkontrollierte Drehposition des umspritzten Sensorkopfes schwierig, welcher direkt mit dem Kabel verbunden ist. Dies führt zu großen radialen Toleranzen für die Befestigungsstrukturen, was bei der späteren Montage des Kabels im Fahrzeug zu Problemen führen kann. So kann die Befestigungsstruktur der Befestigungsvorrichtung nach dem Einbau des Sensors in Bezug auf eine Befestigungsöffnung in der Fahrzeugkarosserie an einer falschen Drehposition angeordnet sein, so dass das Kabel verdreht werden muss, damit die Befestigungsstruktur in die Befestigungsöffnung eingeführt werden kann. Dies kann zu einer unerwünschten Torsionsbelastung des Kabels führen.

Zudem sind Befestigungsvorrichtungen für Leitungen, insbesondere für elektrische Kabel, in einem Fahrzeug bekannt, welche ein Befestigungselement und eine die Leitung umschließende Halterung mit einem Verschluss aufweisen. Die Halterung trägt das das Befestigungselement und ist über den Verschluss derart zumindest teilweise trennbar, dass ein Innenbereich der Halterung in einem vormontierten Zustand um die Leitung gelegt werden kann. Zudem ist die Halterung über den Verschluss derart verschließbar, dass die Halterung in einem montierten Zustand die Leitung vollständig ringförmig umschließt. Bei diesen Ausführungsformen ist die axiale Fixierung der Befestigungsvorrichtung auf der Leitung schwierig.

Aus der DE 10 2010 043 565 A1 ist beispielsweise eine Befestigungsvorrichtung für eine Leitung, insbesondere für ein elektrisches Kabel in einem Fahrzeug, bekannt, welche eine Tülle aufweist, welche die Leitung umschließen kann und mit welcher die Leitung an einem Halter arretiert werden kann. Die Tülle weist hierzu eine Kontur auf, die in einer Aussparung des Halters lösbar befestigt werden kann. Die Tülle ist zumindest teilweise mit einem elastisch verformbaren Material ausgebildet. Die Tülle weist wenigstens zwei Tüllenteilbereiche auf, welche derart zumindest teilweise voneinander trennbar sind, dass die Leitung in einem vormontierten Zustand in einen Innenbereich der Tülle eingelegt werden kann, und welche ferner derart miteinander verbindbar sind, dass die Leitung in einem montierten Zustand vollständig ringförmig von den miteinander verbundenen Tüllenteilbereichen umschlossen ist.

Aus der EP 1 521 024 A1 ist eine gattungsgemäße Befestigungsvorrichtung für eine Leitung in einem Fahrzeug bekannt, welche ein Befestigungselement und eine die Leitung umschließende Halterung mit einem Verschluss umfasst, welche das Befestigungselement trägt. Die Halterung ist über den Verschluss derart zumindest teilweise trennbar, dass ein Innenbereich der Halterung in einem vormontierten Zustand um die Leitung legbar ist. Die Halterung ist über den Verschluss derart verschließbar, dass die Halterung in einem montierten Zustand die Leitung vollständig ringförmig umschließt. Zudem ist am Innenbereich der Halterung eine Fixierstruktur mit radial und axial verlaufenden Rippen ausgebildet, welche im montierten Zustand in einen Mantel der Leitung eindringen und die Halterung an der Leitung axial fixieren und eine Drehbewegung der Halterung verhindern.

Auch die EP 0 764 788 A1 offenbart eine solche Befestigungsvorrichtung für eine Leitung in einem Fahrzeug, mit einem Befestigungselement und einer die Leitung umschließenden Halterung mit einem Verschluss, welche das Befestigungselement trägt. Hierbei ist die Halterung im montierten Zustand an der Leitung axial fixiert und gegen eine Drehbewegung gesichert.

### Offenbarung der Erfindung

Die erfindungsgemäße Befestigungsvorrichtung für eine Leitung in einem Fahrzeug mit den Merkmalen des unabhängigen Patentanspruchs 1 hat demgegenüber den Vorteil, dass die Befestigungsvorrichtung eine Halterung mit einer Fixierstruktur umfasst, welche die Halterung im montierten Zustand axial auf der Leitung fixiert und für eine Drehbewegung freigibt. Hierbei umschließt der Träger die Leitung im montierten Zustand vollständig und kann im montierten Zustand einfach und schnell und ohne bzw. mit geringem Kraftaufwand in eine gewünschte Drehposition bewegt werden. Durch das Schließen des Verschlusses wird die Fixierstruktur der Halterung in den Mantel der Leitung gedrückt und erzeugt eine umlaufende Vertiefung, welcher einen hohen Widerstand gegen eine axiale Bewegung der Halterung erzeugt, jedoch eine Drehbewegung unter Aufbringung von geringen Kräften ermöglicht.

Ausführungsformen der vorliegenden Erfindung stellen eine Befestigungsvorrichtung für eine Leitung, insbesondere für ein elektrisches Kabel, in einem Fahrzeug zur Verfügung, welche ein Befestigungselement und eine die Leitung umschließende Halterung mit einem Verschluss aufweist. Die Halterung trägt das Befestigungselement und ist über den Verschluss derart zumindest teilweise trennbar, dass ein Innenbereich der Halterung in einem vormontierten Zustand um die Leitung legbar ist. Die Halterung ist über den Verschluss derart verschließbar, dass die Halterung in einem montierten Zustand die Leitung vollständig ringförmig umschließt. Erfindungsgemäß ist am Innenbereich der Halterung eine Fixierstruktur ausgebildet, welche im montierten Zustand die Halterung an der Leitung axial fixiert und eine Drehbewegung der Halterung um eine Längsachse der Leitung freigibt. Das Befestigungselement kann dann mit einem korrespondierenden karosserieseitigen Befestigungselement, welches beispielsweise als Befestigungsöffnung ausgeführt ist, zusammenwirken, um die Leitung im Fahrzeug zu befestigen. Besonders vorteilhaft ist, dass die Fixierstruktur als Rippenstruktur mit mindestens einer radial verlaufenden Rippe mit einem spitzen Querschnitt ausgebildet ist, welche im montierten Zustand mindestens eine umlaufende Vertiefung im Mantel der Leitung erzeugt. Die Fixierstruktur weist somit zumindest eine größere Härte als der Mantel der Leitung auf, um die mindestens eine Vertiefung im Leitungsmantel zur axialen Fixierung des Trägers zu erzeugen. Durch das Schließen des Verschlusses wird die mindestens eine Rippe mit spitzem Querschnitt in den Mantel der Leitung gedrückt und erzeugt dort eine umlaufende Vertiefung mit einem spitzem Querschnitt, welcher einen hohen Widerstand gegen eine axiale Bewegung der Halterung erzeugt, jedoch eine Drehbewegung unter Aufbringung von geringen Kräften ermöglicht. Da die Oberfläche des Mantels der Leitung hart ist, entspricht der spitze Querschnitt der erzeugten umlaufenden Vertiefung nicht eins zu eins dem spitzen Querschnitt der korrespondieren Rippe. Der Querschnitt der erzeugten umlaufenden Vertiefung entspricht vielmehr einem "weichgezeichneten" spitzen Querschnitt der korrespondierenden Rippe. Der spitze Querschnitt der mindestens einen radial verlaufenden Rippe kann beispielsweise dreieckförmig oder trapezförmig ausgebildet werden. Zudem kann die mindestens eine Rippe mit spitzem Querschnitt auf einen radial verlaufenden Steg aufgesetzt werden, um eine tiefere Einkerbung im Mantel der Leitung zu erzeugen.

Durch die in den abhängigen Ansprüchen aufgeführten Maßnahmen und Weiterbildungen sind vorteilhafte Verbesserungen der im unabhängigen Patentanspruch 1 angegebenen Befestigungsvorrichtung für eine Leitung in einem Fahrzeug möglich.

In vorteilhafter Ausgestaltung der erfindungsgemäßen Befestigungsvorrichtung kann die Halterung einen mehrteiligen Grundkörper mit mindestens zwei Teilgrundkörpern aufweisen, an deren Innenbereichen die Fixierstruktur ausgebildet werden kann und welche im montierten Zustand die Leitung mit ihren Innenbereichen vollständig umschließen können. Die Teilgrundkörper der Halterung können im vormontierten Zustand jeweils entlang einer Seitenkante über ein integriertes Gelenk miteinander verbunden werden. Das Gelenk kann beispielsweise als Kunststoffhaut, Scharnier oder Spannfeder ausgeführt werden. Die an einer Seitenkante miteinander verbundenen Teilgrundkörper können über die offenen Seitenkanten einfach um die Leitung gelegt werden. An der jeweils offenen Seitenkante können die Teilgrundkörper über eine formschlüssige Verbindung miteinander verbunden werden. Hierzu können eine erste Verschlusskontur an einem ersten Teilgrundkörper und eine zweite Verschlusskontur an einem zweiten Teilgrundkörper den Verschluss ausbilden, welcher die Teilgrundkörper der Halterung im montierten Zustand formschlüssig miteinander verbindet. Diese Ausführungsform ermöglicht eine einfache und schnelle Montage und Demontage der Leitung im Fahrzeug, da der Verschluss der Halterung einfach und schnell geöffnet und die Halterung von der Leitung abgenommen werden kann und an einer anderen Stelle oder an der gleichen Stelle wieder um die Leitung gelegt werden kann.

Alternativ kann die Halterung ein elastisches Band mit der Fixierstruktur aufweisen, welches an einem Ende fest mit dem Verschluss verbunden ist. Das elastische Band kann eine erste Rastkontur aufweisen, welches rastend mit einer zweiten Rastkontur zusammenwirkt, welches in einer Durchgangsöffnung des Verschlusses ausgebildet ist, in welche das freie Ende des elastischen Bandes unter Ausbildung einer Schlaufe einführbar ist, welche sich im montierten Zustand ringförmig um die Leitung legt und die Halterung axial auf der Leitung fixieren kann.

In weiterer vorteilhafter Ausgestaltung der erfindungsgemäßen Befestigungsvorrichtung kann eine erste Rippenstruktur genau eine radial verlaufende Rippe mit spitzem Querschnitt aufweisen. Dies ermöglicht eine Drehbewegung der Halterung mit einem sehr geringen Kraftaufwand. Zudem erhöht sich bei einer vorgegebenen Abbindekraft eines Kabelbinders durch die Verwendung von nur einer Rippe der Druck, den die erste Rippenstruktur auf den Kabelmantel ausüben kann. Alternativ kann eine zweite Rippenstruktur zur Verbesserung der axialen Fixierung mehrere radial verlaufende Rippen mit spitzen Querschnitten aufweisen, welche einen vorgegebenen axialen Abstand zueinander aufweisen.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Darstellung eines Ausführungsbeispiels einer erfindungsgemäßen Befestigungsvorrichtung für eine Leitung in einem Fahrzeug.
Fig. 2 zeigt eine schematische Darstellung eines weiteren Ausführungsbeispiels einer erfindungsgemäßen Befestigungsvorrichtung für eine Leitung in einem Fahrzeug.
Fig. 3 bis 8 zeigen jeweils eine schematische Schnittdarstellung von Ausführungsbeispielen einer Fixierstruktur für eine Halterung der erfindungsgemäßen Befestigungsvorrichtung entlang der Schnittlinien A-A in Fig. 1 und 2.
Fig. 9 zeigt eine schematische Detaildarstellung der Wirkung der Fixierstruktur auf die Leitung im montierten Zustand der Halterung.

### Ausführungsformen der Erfindung

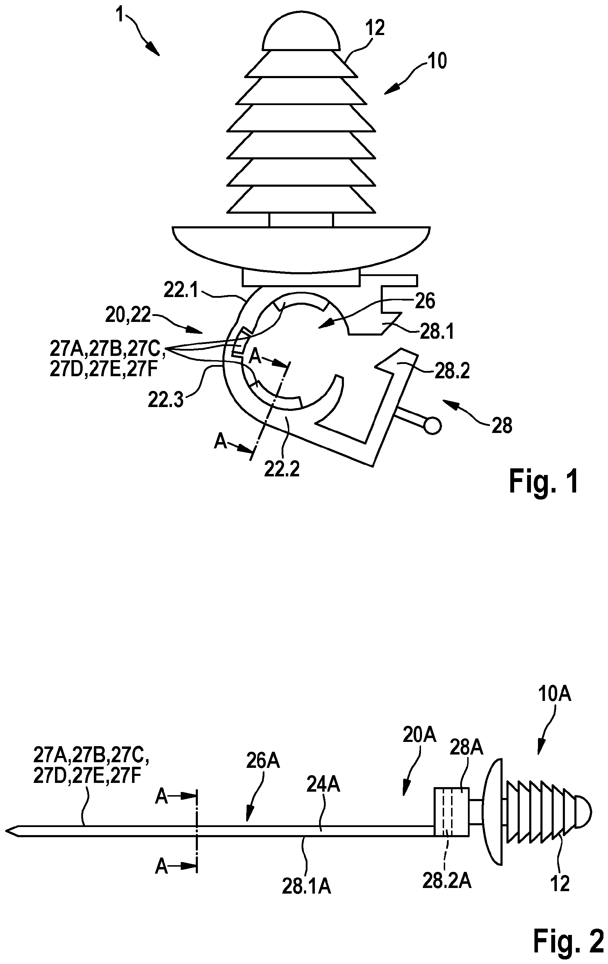

Wie aus Fig. 1 bis 9 ersichtlich ist, umfassen die dargestellten Ausführungsbeispiele einer erfindungsgemäßen Befestigungsvorrichtung 1 für eine Leitung 3, insbesondere für ein elektrisches Kabel, in einem Fahrzeug, jeweils ein Befestigungselement 10, 10A und eine die Leitung 3 umschließende Halterung 20, 20A mit einem Verschluss 28, 28A. Die Halterung 20, 20A trägt das Befestigungselement 10, 10A, welches in den dargestellten Ausführungsbeispielen als Tannenbaumklips ausgeführt ist, welcher in eine entsprechende nicht dargestellte Befestigungsöffnung in der Fahrzeugkarosserie eingeklipst werden kann. Selbstverständlich können die Befestigungsstrukturen auch eine andere geeignete Form aufweisen, um an der Fahrzeugkarosserie befestigt zu werden. Die Halterung 20, 20A ist über den Verschluss 28, 28A derart zumindest teilweise trennbar, dass ein Innenbereich der Halterung 20, 20A in einem vormontierten Zustand um die Leitung 3 gelegt werden kann. Zudem kann die Halterung 20, 20A über den Verschluss 28, 28A derart verschlossen werden, dass die Halterung 20, 20A in einem montierten Zustand die Leitung 3 vollständig ringförmig umschließt. Erfindungsgemäß ist am Innenbereich der Halterung eine Fixierstruktur 26, 26A ausgebildet, welche im montierten Zustand die Halterung 20, 20A an der Leitung 3 axial fixiert und eine Drehbewegung R der Halterung 20, 20A um eine Längsachse der Leitung 3 freigibt. Durch die axiale Fixierung wird eine Axialbewegung A der Halterung 20, 20A entlang der Leitung 3 verhindert oder zumindest erschwert, so dass eine große Kraft aufgebracht werden muss, um die Halterung 20, 20A axial auf der Leitung 3 zu bewegen.

Wie aus Fig. 1 weiter ersichtlich ist, umfasst die Halterung 20 im dargestellten Ausführungsbeispiel der Befestigungsvorrichtung 1 einen mehrteiligen Grundkörper 22, welcher mindestens zwei Teilgrundkörpern 22.1, 22.2 aufweist, an deren Innenbereichen die Fixierstruktur 26 ausgebildet ist. Die Teilgrundkörper 22.1, 22.2 der Halterung 20 sind im dargestellten vormontierten Zustand jeweils entlang einer Seitenkante über ein integriertes Gelenk 22.3 miteinander verbunden. Im dargestellten Ausführungsbeispiel ist das Gelenk 22.3 als Kunststoffhaut ausgeführt. Alternativ kann das Gelenk 22.3 beispielsweise als Scharnier oder Spannfeder ausgeführt werden. Die an einer Seitenkante miteinander verbundenen Teilgrundkörper 22.1, 22.2 können über die offene Seitenkanten einfach um die Leitung 3 gelegt werden. An der jeweils offenen Seitenkante können die Teilgrundkörper 22.1, 22.2 über den Verschluss 28 miteinander verbunden werden. Im montierten Zustand bilden die Teilgrundkörper 22.1, 22.2 einen kreisförmigen Innenbereich aus, welcher die Leitung 3 vollständig umschließt.

Wie aus Fig. 1 weiter ersichtlich ist, bilden eine erste Verschlusskontur 28.1 an einem ersten Teilgrundkörper 22.1 und eine zweite Verschlusskontur 28.2 an einem zweiten Teilgrundkörper 22.2 den Verschluss 28 aus, welcher die Teilgrundkörper 22.1, 22.2 der Halterung 20 im montierten Zustand formschlüssig miteinander verbindet. Der Verschluss 28 bildet im dargestellten Ausführungsbeispiel eine formschlüssige Klipsverbindung mit korrespondierenden zusammenwirkenden Verschlusskonturen 28.1, 28.2 aus, welche so ineinander gesteckt werden können, dass der Grundkörper 22 der Halterung 20 die Leitung 3 im montierten Zustand vollständig ringförmig umschließt. Im dargestellten Ausführungsbeispiel umfasst der erste Teilgrundkörper 22.1 die als Rastnase ausgeführte erste Verschlusskontur 28.1, welche mit der korrespondierenden als Rastvertiefung ausgeführten zweiten Verschlusskontur 28.2 des zweiten Teilgrundkörpers 22.2 rastend zusammenwirkt. Dies erlaubt eine einfache und schnelle Montage bzw. Demontage der Befestigungsvorrichtung 1.

Wie aus Fig. 2 weiter ersichtlich ist, umfasst die Halterung 20A im dargestellten Ausführungsbeispiel der Befestigungsvorrichtung 1A ein elastisches Band 24A mit der Fixierstruktur 26A, welches an einem Ende fest mit dem Verschluss 28A verbunden ist. Das elastische Band 24A weist eine erste Rastkontur 28.1A auf, welches rastend mit einer zweiten Rastkontur 28.2A zusammenwirkt, welches in einer Durchgangsöffnung des Verschlusses 28A ausgebildet ist, in welche das freie Ende des elastischen Bandes 24A unter Ausbildung einer Schlaufe einführbar ist. Durch Ziehen am freien Ende des in die Durchgangsöffnung des Verschlusses 28A eingeführten Bandes 24A verjüngt sich die Schlaufe, bis sich das Band 24A im montierten Zustand ringförmig um die Leitung 3 legt und die Fixierstruktur 26A in den Mantel der Leitung 3 gedrückt wird, so dass die Halterung 20A axial auf der Leitung 3 fixiert ist.

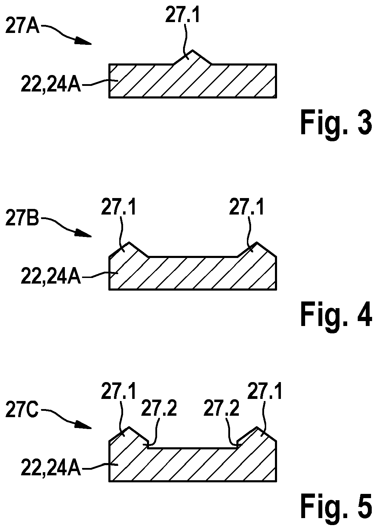

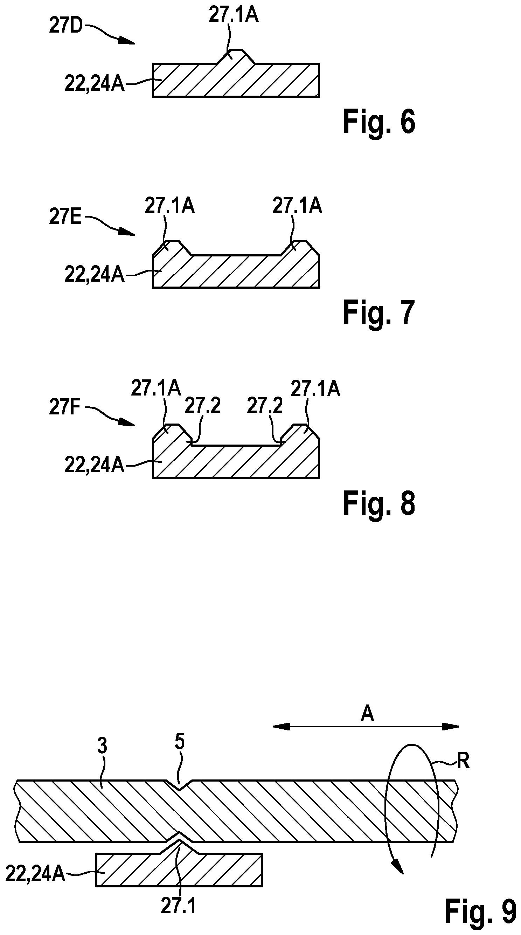

Wie aus Fig. 3 bis 8 weiter ersichtlich ist, ist die Fixierstruktur 26, 26A als Rippenstruktur 27A, 27B, 27C, 27D, 27E, 27F mit mindestens einer radial verlaufenden Rippe 27.1, 27.1A mit einem spitzen Querschnitt ausgebildet ist. Wie aus Fig. 3 bis 5 weiter ersichtlich ist, sind die radial verlaufenden Rippen 27.1 in den dargestellten Ausführungsbeispielen der Rippenstruktur 27A, 27B, 27C mit einem dreieckigen Querschnitt ausgebildet. Wie aus Fig. 6 bis 8 weiter ersichtlich ist, sind die radial verlaufenden Rippen 27.1A in den dargestellten Ausführungsbeispielen der Rippenstruktur 27D, 27E, 27F mit einem trapezförmigen Querschnitt ausgebildet.

Wie aus Fig. 9 weiter ersichtlich ist, erzeugt die radial verlaufenden Rippe 27.1 mit dem dreieckigen Querschnitt im montierten Zustand eine korrespondierende umlaufende Vertiefung 5 im Mantel der Leitung 3, die ebenfalls einen dreieckigen Querschnitt aufweist. Aufgrund der Härte der Oberfläche des Mantels der Leitung 3, entspricht der dreieckige Querschnitt der erzeugten umlaufenden Vertiefung 5 nicht eins zu eins dem dreieckigen Querschnitt der korrespondieren Rippe 27.1. Der dreieckige Querschnitt der erzeugten umlaufenden Vertiefung 5 entspricht vielmehr einem "weichgezeichneten" dreieckigen Querschnitt der korrespondierenden Rippe 27.1. Die Fixierstruktur 26, 26A weist somit zumindest eine größere Härte als der Mantel der Leitung 3 auf, um die Vertiefungen 5 im Leitungsmantel zur Fixierung der Halterung 20 zu erzeugen. Die Befestigungsvorrichtung 1, 1A mit der Fixierstruktur 26, 26A wird vorzugsweise aus einem Kunststoff, wie beispielsweise einem Polyamid (PA6.6) gefertigt, welcher über eine gute Steifigkeit, Härte, Abriebfestigkeit und Wärmeformbeständigkeit verfügt. Selbstverständlich können auch andere geeignete Kunststoffe zur Herstellung der Befestigungsvorrichtung 1, 1A verwendet werden.

Wie aus Fig. 3 und 6 weiter ersichtlich ist, weist eine erste Rippenstruktur 27A, 27D in den dargestellten Ausführungsbeispielen jeweils genau eine radial verlaufende Rippe 27.1, 27.1A mit spitzem Querschnitt auf. In dem in Fig. 3 dargestellten Ausführungsbeispiel weist die radial verlaufende Rippe 27.1 einen dreieckigen Querschnitt auf. In dem in Fig. 6 dargestellten Ausführungsbeispiel weist die radial verlaufende Rippe 27.1A einen trapezförmigen Querschnitt auf. Die Rippe 27.1, 27.1A ist jeweils etwa in der Mitte des Grundkörpers 22 bzw. des elastischen Bands 24A angeordnet.

Wie aus Fig. 4 und 7 weiter ersichtlich ist, weist eine zweite Rippenstruktur 27B, 27E in den dargestellten Ausführungsbeispielen jeweils zwei radial verlaufende Rippen 27.1, 27.1A mit spitzem Querschnitt auf, welche einen vorgegebenen axialen Abstand zueinander aufweisen. In dem in Fig. 4 dargestellten Ausführungsbeispiel weisen die radial verlaufenden Rippen 27.1 jeweils einen dreieckigen Querschnitt auf. In dem in Fig. 7 dargestellten Ausführungsbeispiel weisen die radial verlaufenden Rippen 27.1A jeweils einen trapezförmigen Querschnitt auf. Die Rippen 27.1, 27.1A sind in den dargestellten Ausführungsbeispielen jeweils am äußeren Rand des Grundkörpers 22 bzw. des elastischen Bands 24A angeordnet.

Wie aus Fig. 5 und 8 weiter ersichtlich ist, weist eine dritte Rippenstruktur 27C, 27E im dem dargestellten Ausführungsbeispielen jeweils zwei radial verlaufende Stege 27.2 auf, auf welchen jeweils eine Rippe 27.1, 27.1A mit spitzem Querschnitt aufgesetzt ist. Die zwei radial verlaufende Stege 27.2 weisen einen vorgegebenen axialen Abstand zueinander auf. In dem in Fig. 5 dargestellten Ausführungsbeispiel weisen die radial verlaufenden Rippen 27.1 jeweils einen dreieckigen Querschnitt auf. In dem in Fig. 8 dargestellten Ausführungsbeispiel weisen die radial verlaufenden Rippen 27.1A jeweils einen trapezförmigen Querschnitt auf. In den dargestellten Ausführungsbeispielen sind die Stege 27.2 mit den aufgesetzten Rippen 27.1, 27.1A jeweils am äußeren Rand des Grundkörpers 22 bzw. des elastischen Bands 24A angeordnet.

## Patentansprüche

1. Befestigungsvorrichtung (1) mit einer Leitung (3) und einem Befestigungselement (10, 10A) und einer die Leitung (3) umschließenden Halterung (20, 20A) mit einem Verschluss (28, 28A), welche das Befestigungselement (10, 10A) trägt, wobei die Halterung (20, 20A) über den Verschluss (28, 28A) derart zumindest teilweise trennbar ist, dass ein Innenbereich der Halterung (20, 20A) in einem vormontierten Zustand um die Leitung (3) legbar ist, und wobei die Halterung (20, 20A) über den Verschluss (28, 28A) derart verschließbar ist, dass die Halterung (20, 20A) in einem montierten Zustand die Leitung (3) vollständig ringförmig umschließt, wobei am Innenbereich der Halterung eine Fixierstruktur (26, 26A) ausgebildet ist, welche im montierten Zustand die Halterung (20, 20A) an der Leitung (3) axial fixiert, **dadurch gekennzeichnet, dass** die Fixierstruktur (26, 26A) als Rippenstruktur (27A, 27B, 27C, 27D, 27E, 27F) mit mindestens einer radial verlaufenden Rippe (27.1, 27.1A) mit einem spitzen Querschnitt ausgebildet ist, welche im montierten Zustand mindestens eine umlaufende Vertiefung (5) im Mantel der Leitung (3) erzeugt, welche einem weichgezeichneten Querschnitt der korrespondierenden Rippenstruktur entspricht, sodass die Fixierstruktur (26, 26A) im montierten Zustand eine Drehbewegung (R) der Halterung (20, 20A) um eine Längsachse der Leitung (3) ermöglicht.

2. Befestigungsvorrichtung nach Anspruch 1, **dadurch gekennzeichnet, dass** die Halterung (20) einen mehrteiligen Grundkörper (22) mit mindestens zwei Teilgrundkörpern (22.1, 22.2) aufweist, an deren Innenbereichen die Fixierstruktur (26) ausgebildet ist und welche im montierten Zustand die Leitung (3) mit ihren Innenbereichen vollständig umschließen.

3. Befestigungsvorrichtung nach Anspruch 2, **dadurch gekennzeichnet, dass** die Teilgrundkörper (22.1, 22.2) der Halterung (20) im vormontierten Zustand jeweils entlang einer Seitenkante über ein integriertes Gelenk (22.3) miteinander verbunden sind.

4. Befestigungsvorrichtung nach Anspruch 3, **dadurch gekennzeichnet, dass** eine erste Verschlusskontur (28.1) an einem ersten Teilgrundkörper (22.1) und eine zweite Verschlusskontur (28.2) an einem zweiten Teilgrundkörper (22.2) den Verschluss (28) ausbilden, welcher die Teilgrundkörper (22.1, 22.2) der Halterung (20) im montierten Zustand formschlüssig miteinander verbindet.

5. Befestigungsvorrichtung nach einem der Ansprüche 1 bis 4, **dadurch gekennzeichnet, dass** die Halterung (20A) ein elastisches Band (24A) mit der Fixierstruktur (26A) aufweist, welches an einem Ende fest mit dem Verschluss (28A) verbunden ist.

6. Befestigungsvorrichtung nach Anspruch 5, **dadurch gekennzeichnet, dass** das elastische Band (24A) eine erste Rastkontur (28.1A) aufweist, welches rastend mit einer zweiten Rastkontur (28.2A) zusammenwirkt, welches in einer Durchgangsöffnung des Verschlusses (28A) ausgebildet ist, in welche das freie Ende des elastischen Bandes (24A) unter Ausbildung einer Schlaufe einführbar ist, welche sich im montierten Zustand ringförmig um die Leitung (3) legt und die Halterung (20A) axial auf der Leitung (3) fixiert.

7. Befestigungsvorrichtung nach einem der Ansprüche 1 bis 6, **dadurch gekennzeichnet, dass** die mindestens eine Rippe (27.1, 27.1A) mit spitzem Querschnitt auf einen radial verlaufenden Steg (27.2) aufgesetzt ist.

8. Befestigungsvorrichtung nach Anspruch 7, **dadurch gekennzeichnet, dass** eine erste Rippenstruktur (27A, 27D) genau eine radial verlaufende Rippe (27.1, 27.1A) mit spitzem Querschnitt aufweist.

9. Befestigungsvorrichtung nach Anspruch 7, **dadurch gekennzeichnet, dass** eine zweite Rippenstruktur (27B, 27C, 27E, 27F) mehrere radial verlaufende Rippen (27.1, 27.1A) mit spitzen Querschnitten aufweist, welche einen vorgegebenen axialen Abstand zueinander aufweisen.

10. Befestigungsvorrichtung nach einem der Ansprüche 1 bis 9, **dadurch gekennzeichnet, dass** der spitze Querschnitt der mindestens einen radial verlaufenden Rippe (27.1, 27.1A) dreieckförmig oder trapezförmig ausgebildet ist.

## Claims

1. Fastening device (1) with a line (3) and a fastening element (10, 10A) and a retainer (20, 20A) which encloses the line (3) and which has a closure (28, 28A), which retainer bears the fastening element (10, 10A), wherein the retainer (20, 20A) can be at least partially separated by way of the closure (28, 28A) in such a way that, in a premounted state, an inner region of the retainer (20, 20A) can be placed around the line (3), and wherein the retainer (20, 20A) can be closed by way of the closure (28, 28A) in such a way that, in a mounted state, the retainer (20, 20A) completely annularly encloses the line (3), wherein a fixing structure (26, 26A) is formed on the inner region of the retainer and, in the mounted state, axially fixes the retainer (20, 20A) on the line (3), **characterized in that** the fixing structure (26, 26A) takes the form of a ribbed structure (27A, 27B, 27C, 27D, 27E, 27F) with at least one radially extending rib (27.1, 27.1A) having a sharp cross section, which rib, in the mounted state, creates at least one peripheral depression (5) in the jacket of the line (3) that corresponds to a softened cross section of the corresponding ribbed structure, with the result that, in the mounted state, the fixing structure (26, 26A) allows a rotational movement (R) of the retainer (20, 20A) around a longitudinal axis of the line (3).

2. Fastening device according to Claim 1, **characterized in that** the retainer (20) has a multi-part basic body (22) with at least two partial basic bodies (22.1, 22.2) on whose inner regions the fixing structure (26) is formed and which, in the mounted state, completely enclose the line (3) by their inner regions.

3. Fastening device according to Claim 2, **characterized in that**, in the premounted state, the partial basic bodies (22.1, 22.2) of the retainer (20) are in each case connected to one another along a lateral edge via an integrated joint (22.3).

4. Fastening device according to Claim 3, **characterized in that** a first closure contour (28.1) on a first partial basic body (22.1) and a second closure contour (28.2) on a second partial basic body (22.2) form the closure (28), which connects the partial basic bodies (22.1, 22.2) of the retainer (20) to one another in a form-fitting manner in the mounted state.

5. Fastening device according to one of Claims 1 to 4, **characterized in that** the retainer (20A) has an elastic strip (24A) with the fixing structure (26A), which strip is fixedly connected at one end to the closure (28A).

6. Fastening device according to Claim 5, **characterized in that** the elastic strip (24A) has a first latching contour (28.1A) which latchingly interacts with a second latching contour (28.2A) which is formed in a through-opening of the closure (28A), into which through-opening the free end of the elastic strip (24A) can be inserted with the formation of a loop which, in the mounted state, is placed annularly around the line (3) and fixes the retainer (20A) axially on the line (3).

7. Fastening device according to one of Claims 1 to 6, **characterized in that** the at least one rib (27.1, 27.1A) having a sharp cross section is attached to a radially extending web (27.2).

8. Fastening device according to Claim 7, **characterized in that** a first ribbed structure (27A, 27D) has precisely one radially extending rib (27.1, 27.1A) with a sharp cross section.

9. Fastening device according to Claim 7, **characterized in that** a second ribbed structure (27B, 27C, 27E, 27F) has a plurality of radially extending ribs (27.1, 27.1A) with sharp cross sections which have a predetermined axial spacing from one another.

10. Fastening device according to one of Claims 1 to 9, **characterized in that** the sharp cross section of the at least one radially extending rib (27.1, 27.1A) is triangular or trapezoidal in form.

## Revendications

1. Dispositif de fixation (1) comprenant une conduite (3) et un élément de fixation (10, 10A) et un élément de retenue (20, 20A) entourant la conduite (3) avec une fermeture (28, 28A), lequel porte l'élément de fixation (10, 10A), l'élément de retenue (20, 20A) pouvant être écarté au moins en partie par le biais de la fermeture (28, 28A) de telle sorte qu'une région intérieure de l'élément de retenue (20, 20A) puisse être placée dans un état prémonté autour de la conduite (3), et l'élément de retenue (20, 20A) pouvant être fermé par le biais de la fermeture (28, 28A) de telle sorte que l'élément de retenue (20, 20A), dans un état monté, entoure complètement la conduite (3) sous forme annulaire, une structure de fixation (26, 26A) étant réalisée au niveau d'une région intérieure de l'élément de retenue, laquelle, dans l'état monté, fixe axialement l'élément de retenue (20, 20A) à la conduite (3), **caractérisé en ce que** la structure de fixation (26, 26A) est réalisée sous forme de structure nervurée (27A, 27B, 27C, 27D, 27E, 27F) avec au moins une nervure (27.1, 27.1A) s'étendant radialement avec une section transversale pointue, qui, dans l'état monté, produit au moins un renfoncement périphérique (5) dans l'enveloppe de la conduite (3), qui correspond à une section transversale adoucie de la structure nervurée correspondante, de telle sorte que la structure de fixation (26, 26A), dans l'état monté, permette un mouvement de rotation (R) de l'élément de retenue (20, 20A) autour d'un axe longitudinal de la conduite (3).

2. Dispositif de fixation selon la revendication 1, **caractérisé en ce que** l'élément de retenue (20) présente un corps de base en plusieurs parties (22) avec au moins deux corps de base partiels (22.1, 22.2) au niveau des régions intérieures desquels est réalisée la structure de fixation (26), et qui, dans l'état monté, entourent complètement la conduite (3) avec leurs régions intérieures.

3. Dispositif de fixation selon la revendication 2, **caractérisé en ce que** les corps de base partiels (22.1, 22.2) de l'élément de retenue (20), dans l'état prémonté, sont à chaque fois connectés l'un à l'autre le long d'une arête latérale par le biais d'une articulation intégrée (22.3).

4. Dispositif de fixation selon la revendication 3, **caractérisé en ce qu'**un premier contour de fermeture (28.1) au niveau d'un premier corps de base partiel (22.1) et un deuxième contour de fermeture (28.2) au niveau d'un deuxième corps de base partiel (22.2) constituent la fermeture (28), qui relie l'un à l'autre par engagement par correspondance de formes les corps de base partiels (22.1, 22.2) de l'élément de retenue (20) dans l'état monté.

5. Dispositif de fixation selon l'une quelconque des revendications 1 à 4, **caractérisé en ce que** l'élément de retenue (20A) présente une bande élastique (24A) avec la structure de fixation (26A), qui est connectée fixement par une extrémité à la fermeture (28A).

6. Dispositif de fixation selon la revendication 5, **caractérisé en ce que** la bande élastique (24A) présente un premier contour d'encliquetage (28.1A) qui coopère par encliquetage avec un deuxième contour d'encliquetage (28.2A), qui est réalisé dans une ouverture de passage de la fermeture (28A) dans laquelle l'extrémité libre de la bande élastique (24A) peut être introduite en réalisant une boucle, qui se place sous forme annulaire autour de la conduite (3) dans l'état monté et qui fixe l'élément de retenue (20A) axialement sur la conduite (3).

7. Dispositif de fixation selon l'une quelconque des revendications 1 à 6, **caractérisé en ce que** l'au moins une nervure (27.1, 27.1A) est placée avec une section transversale pointue sur une nervure (27.2) s'étendant radialement.

8. Dispositif de fixation selon la revendication 7, **caractérisé en ce qu'**une première structure nervurée (27A, 27D) présente exactement une nervure s'étendant radialement (27.1, 27.1A) avec une section transversale pointue

9. Dispositif de fixation selon la revendication 7, **caractérisé en ce qu'**une deuxième structure nervurée (27B, 27C, 27E, 27F) présente plusieurs nervures s'étendant radialement (27.1, 27.1A) avec des sections transversales pointues, lesquelles présentent une distance axiale prédéfinie les unes aux autres.

10. Dispositif de fixation selon l'une quelconque des revendications 1 à 9, **caractérisé en ce que** la section transversale pointue de l'au moins une nervure s'étendant radialement (27.1, 27.1A) est réalisée sous forme triangulaire ou trapézoïdale.
